# EUROPÄISCHE PATENTSCHRIFT

(11) **EP 0 926 468 B1**
(45) Veröffentlichungstag und Bekanntmachung des Hinweises auf die Patenterteilung: **06.02.2008**
(21) Anmeldenummer: 98119964.9
(22) Anmeldetag: 22.10.1998
(51) Int. Cl.: G01D 7/00

(54) **Anzeigevorrichtung**
Display
Dispositif d'affichage

(30) Priorität: 23.12.1997 DE 19757564
(43) Veröffentlichungstag der Anmeldung: 30.06.1999
(73) Patentinhaber: Siemens VDO Automotive AG, 93055 Regensburg (DE)
(72) Erfinder: Wehner, Manfred, 61200 Wölfersheim (DE)

(56) Entgegenhaltungen:
- DE-A- 3 732 144
- DE-A- 19 500 668
- DE-A- 19 755 470
- GB-A- 2 056 067

## Beschreibung

Die Erfindung betrifft eine Anzeigevorrichtung, insbesondere für ein Fahrzeug, mit einem von einem Messwerk antreibbaren Zeiger zur analogen Darstellung von Messwerten, einer dem Zeiger zugeordneten festen Skalenteilung und einem in einem von dem Zeiger zumindest teilweise überstrichenen Bereich angeordneten Display zur Darstellung veränderbarer Informationen, wobei auf dem Display eine Skalenbeschriftung veränderbar darstellbar ist.

Derartige Anzeigevorrichtungen sind bekannt und werden z. B. in der Messtechnik in Form analoger Zeigerinstrumente eingesetzt. Bei den bekannten Vorrichtungen lassen sich auf dem Skalenblatt befindliche Skalenbeschriftungen durch elektronische Ansteuerung erzeugen und verändern. Der Ort der Skalenbeschriftung ist dabei im Verhältnis zu der Skalenteilung fest vorgegeben.

Andere bekannte Anzeigevorrichtungen mit einem analogen Zeigerinstrument und einem von dem Zeiger überstrichenen Display zur Darstellung veränderbarer Informationen weisen eine große ansteuerbare Skalenfläche auf, wobei sämtliche Anzeigeelemente einschließlich der Skalenteilungen variabel ansteuerbar und auf dem Display darstellbar sind. Die Größe der ansteuerbaren Displayfläche ist jedoch unmittelbar ein Maß für die Herstellungskosten des Displays und somit des Anzeigeinstruments, womit diese bekannten Anzeigeinstrumente sehr kostspielig sind. Darüber hinaus ist die Darstellung auf dem Display auf eine ebene Darstellung festgelegt, womit die optischen Gestaltungsmöglichkeiten dieser Anzeigevorrichtung sowohl unter ergonomischen als auch unter ästhetischen Gesichtspunkten eingeschränkt sind.

Aus der DE-A-197-55-470 ist eine Anzeigevorrichtung, insbesondere für Kraftfahrzeuge, bekannt, bei der auf einem Bildschirm eine mehrere Anzeigen nachgebildet werden. Aus der GB-A-20-56-067 ist eine Anzeige, insbesondere für Kraftfahrzeuge, bekannt, mit einem von einem Messwerk antreibbaren Zeiger, wobei eine Skalenteilung zu- und abschaltbar ist. Aus der DE-A-37-32-144 ist eine analoge Anzeigevorrichtung mit einem antreibbaren Zeiger bekannt, bei der der Zeiger über ein Display wandert und so beliebige Skalen darstellbar sind. Aus der DE-A-195-00-668 ist eine Anzeigevorrichtung, insbesondere für ein Fahrzeug mit einem von einem Messwerk antreibbaren Zeiger zur analogen Darstellung von Messwerten bekannt, mit einer dem Zeiger zugeordneten festen Skalenteilung und einem in einem von dem Zeiger zumindest teilweise überstrichenen Bereich angeordneten Display zur Darstellung veränderbarer Informationen, wobei auf dem Display eine Skalenbeschriftung darstellbar ist. Hierbei ist die Skalenteilung außerhalb eines ansteuerbaren Displaybereichs angeordnet und es erstreckt sich ein Teilbereich des Displays entlang der Skalenteilung und in diesem Teilbereich ist die Skalenbeschriftung darstellbar. Weiterhin ist in der letzt genannten Schrift der Zeiger um einer zum Anzeigerebene des Displays in etwa senkrechter Achse verschwenkbar. Aufgabe der Erfindung ist es, dass der in der Anzeigevorrichtung zur Verfügung stehende Einbauraum optimal ausgenutzt wird.

Gemäß der Erfindung ist zwischen Meßwerkabtriebswelle und Zeigerwelle ein eine Drehbewegung der Meßwerkabtriebswelle auf die Zeigerwelle übertragendes Getriebe angeordnet. Damit ist es möglich, das Meßwerk räumlich von dem Zeiger zu trennen und eine freizügige Meßwerksanordnung so zu wählen, daß der in der Anzeigevorrichtung zur Verfügung stehende Einbauraum optimal ausgenutzt wird.

Gemäß einer vorteilhaften Weiterbildung der Erfindung ist die Skalenbeschriftung veränderbar, wodurch sich in sehr einfacher Weise sowohl der Anzeigebereich des Meßinstruments als auch die angezeigte Einheit variieren läßt, ohne daß an dem Instrument mechanische Umbauten vorgenommen werden müssen. Das ist z.B. bei Geschwindigkeitsanzeigen von Kraftfahrzeugen bedeutsam, wenn diese weltweit in Verkehr gebracht werden sollen. Eine Umstellung der Anzeigeeinheit von bspw. Kilometer pro Stunde in Meilen pro Stunde kann dann durch eine einfache Änderung der Ansteuerung des Displays und des Zeigermeßwerks erfolgen. Besonders einfach ist es, wenn diese Änderung von einer Ansteuerungssoftware durchgeführt wird.

Für eine freizügige, nur von der jeweiligen Ansteuerung abhängige Darstellung von Informationen ist es von besonderem Vorteil, wenn das Display ein Dot-Matrix-Display ist. Mit einem solchen Display können beliebige Darstellungen zur Anzeige gebracht werden, die sich jeweils aus einer Menge von angesteuerten Punkten eines Punktrasters zusammensetzen.

Das Display ist vorteilhaft besonders preisgünstig und in großen Serien herstellbar, wenn es eine Flüssigkristallzelle aufweist. Flüssigkristallzellen bieten zusätzlich den Vorteil, daß sie sich aufgrund ihrer geringen Leistungsaufnahme im Betrieb nicht erwärmen und somit nicht zu einer unerwünschten Aufheizung des Anzeigeinstruments beitragen.

Gemäß einer anderen vorteilhaften Weiterbildung der Erfindung ist der Zeiger um eine zu der Anzeigeebene des Displays in etwa senkrechte Achse schwenkbar. Derartige Rundinstrumente sind besonders gut ablesbar und beanspruchen eine nur geringe Einbaufläche.

Die Anzeigevorrichtung kann vorteilhaft sehr kompakt aufgebaut sein, wenn der Zeiger in einem einer Zeigerspitze abgewandten Bereich eine mit einer Zeigerwelle verbundene Zeigernabe aufweist und wenn die Drehachsen der Zeigerwelle und einer Abtriebswelle des Meßwerks deckungsgleich oder in etwa parallel zueinander angeordnet sind. Vorzugsweise sind die Zeigerwelle und die Meßwerkabtriebswelle ein einziges Bauteil bildend miteinander verbunden. Dadurch wird aufgrund einer Verringerung der Anzahl der Einzelbauteile die Anzahl der Montagevorgänge bei der Fertigung der Anzeigevorrichtung gesenkt und die Lagerhaltung der benötigten Einzelteile vereinfacht.

Vorzugsweise ist das Getriebe ein Zugmittel-, Reibrad- oder Zahnradgetriebe, so daß die Übertragung der Drehbewegungen auf einfache und sichere Weise mit nur wenigen beweglichen Bauteilen erfolgt. Der auf der Rückseite eines Displays und/oder eines Zifferblattes einer Anzeigevorrichtung zur Verfügung stehende Einbauraum ist aufgrund der großen Anzahl unterzubringender elektronischer und mechanischer Bauteile sehr begrenzt, so daß es von großem Vorteil ist, wenn zumindest ein Teil des Getriebes vor der einem Betrachter zugewandten Seite der Anzeigeebene des Displays angeordnet ist. Um den gestalterischen Eindruck der Anzeigevorrichtung nicht zu stören und um das Getriebe vor Verschmutzung zu schützen, sind die vor der Anzeigeebene angeordneten Teile des Getriebes betrachterseitig vorzugsweise mit einer Blende abgedeckt.

Werden auf dem Display der erfindungsgemäßen Anzeigevorrichtung großflächige Informationen wie z.B. Verkehrsführungshinweise angezeigt, wobei der Zeiger währenddessen nicht benötigt wird, so ist es vorteilhaft, wenn der Zeiger betrachterseitig mit einer Blende abdeckbar ist. Auf diese Weise liegt ein übersichtliches Anzeigefeld ohne überflüssige, ablenkende Elemente vor, wodurch die Aufmerksamkeit eines Betrachters uneingeschränkt auf die dargestellten Informationen gelenkt wird. Vorzugsweise ist die ein Getriebe abdeckende Blende identisch mit der Blende, mit der der Zeiger abdeckbar ist.

Die Ablesbarkeit von mit dem Zeiger dargestellten Meßwerten ist besonders gut, wenn die Skalenteilung in unmittelbarer Nähe oder innerhalb eines von der Zeigerspitze überstrichenen Bereichs der Anzeigevorrichtung angeordnet ist. In besonders einfacher Weise ist dabei die Skalenteilung auf dem Display angebracht. Die durch die erfindungsgemäße Anzeigevorrichtung gebotenen ergonomischen und gestalterischen Möglichkeiten lassen sich jedoch besonders gut ausschöpfen, wenn gemäß einer vorteilhaften Weiterbildung der Erfindung die Skalenteilung auf einem Rahmenelement angebracht ist, wobei das Rahmenelement das Display zumindest teilweise umgreift. Dabei ist das Display vorzugsweise in eine Ausnehmung des Rahmenelements eingesetzt, wodurch der Rahmen gleichzeitig Halter des Displays sein kann.

Vor allem aufgrund einer einfacheren Fertigbarkeit weisen Displays üblicherweise eine rechteckige Form auf. Um dem Rahmenelement eine andere als eine rechteckige Form, z.B. eine runde oder elliptische Gestalt, geben zu können, ist es von besonderem Vorteil, wenn das Rahmenelement auf das Display aufgesetzt ist. Dadurch möglicherweise nicht genutzte Randbereiche des Displays brauchen - da sie abgedeckt sind - nicht als ansteuerbare Anzeigefläche zur Verfügung zu stehen und können daher einfach und kostengünstig als unbehandelte Trägerfläche ausgeführt sein.

Man könnte sich vorstellen, die erfindungsgemäße Anzeigevorrichtung mittels Auflicht zu beleuchten, um insbesondere eine Ablesbarkeit bei Umgebungsdunkelheit zu ermöglichen. Die Ablesbarkeit ist jedoch besonders gut, wenn gemäß einer vorteilhaften Weiterbildung der Erfindung das Rahmenelement ein Lichtleiter ist. Dadurch kann sowohl die auf dem Rahmenelement angebrachte Skalenteilung unmittelbar als auch das Display durch gegebenenfalls gezielt aus dem Rahmenelement ausgekoppeltes Licht beleuchtet werden. Die Ablesbarkeit und den optischen Eindruck der Anzeigevorrichtung weiter verbessernd ist es, wenn die Skalenteilung gegenüber der Anzeigeebene des Displays erhöht oder vertieft ist. Auf diese Weise kann eine plastische Gestaltung erreicht werden.

Insbesondere bei Umgebungsdunkelheit ist es von Vorteil, wenn die Skalenteilung erleuchtbar ist, so daß auch bei Dunkelheit eine sichere Wahrnehmung der dargestellten Informationen gewährleistet ist.

Man könnte sich vorstellen, den gesamten Display-Bereich zur Informationsdarstellung zu nutzen. Jedoch ist es häufig ausreichend, lediglich Teilbereiche des Displays dafür zu nutzen. In diesem Fall ist es vorteilhaft, wenn ein Teilbereich des Displays von einer Blende abgedeckt ist und auf diese Weise eine einheitliche Gestaltung der Anzeigevorrichtung möglich ist.

Es ist vorstellbar, auf dem Display fallweise lediglich bestimmte Informationen, z.B. alternative Skalenbeschriftungen oder Warnhinweise, darzustellen. Es ist jedoch von besonderem Vorteil, wenn das Display in zumindest einem Teilbereich frei ansteuerbar ist, wodurch auf dem Display freizügig Informationen dargestellt werden können und auch Bilder wie z.B. Kartenausschnitte eines Verkehrsleitsystems oder Videosequenzen zur Anzeige gebracht werden können.

Der Aufbau des Displays ist vorteilhaft vereinfacht, wenn es einen nicht ansteuerbaren Bereich aufweist. Dieser nicht ansteuerbare Bereich ist z.B. ein von einer Blende abgedeckter Bereich.

Zur Sicherung einer Notlauffunktion der Anzeigevorrichtung, z.B. bei einer Störung im Elektroniksystem eines Fahrzeugs, ist es von Vorteil, wenn das Display ohne Beleuchtung ablesbar ist. Bei der Verwendung einer Flüssigkristallzelle ist diese daher vorzugsweise transflektiv oder reflektiv. Von besonderem Vorteil ist es, wenn das Display beleuchtbar ist, so daß auch bei Umgebungsdunkelheit die Wahrnehmung von auf dem Display dargestellten Informationen ermöglicht ist.

Gemäß einer anderen vorteilhaften Weiterbildung der Erfindung weist die Anzeigevorrichtung ein Zifferblatt auf, wobei die Skalenteilung auf dem Zifferblatt dargestellt ist und zumindest ein ansteuerbarer Bereich des Displays in einer Ausnehmung des Zifferblattes angeordnet ist. Eine derartige Gestaltung bietet sich vor allem dann an, wenn die Anzeigevorrichtung Bestandteil eines Kombinationsinstrumentes, z.B. eines Kraftfahrzeugs, ist.

Die Erfindung wird im folgenden anhand von in der beigefügten Zeichnung dargestellten Ausführungsbeispielen näher erläutert. Es zeigt:
- Figur 1: eine erfindungsgemäße Anzeigevorrichtung,
- Figur 2: die Anzeigevorrichtung nach Figur 1 in einem anderen Ansteuerungszustand,
- Figur 3: eine weitere erfindungsgemäße Anzeigevorrichtung und
- Figur 4: einen Schnitt entlang Linie IV-IV der Anzeigevorrichtung nach Figur 3.

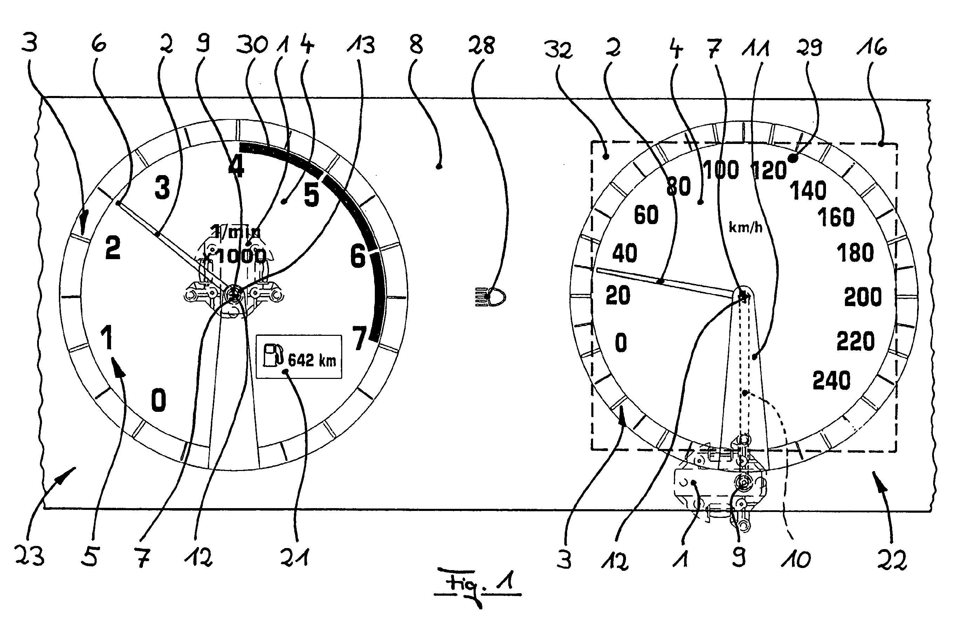

Eine in Figur 1 dargestellte Anzeigevorrichtung eines Kraftfahrzeuges weist zwei Anzeigeeinheiten 22, 23 mit jeweils einem von einem Meßwerk 1 antreibbaren Zeiger 2 zur analogen Darstellung von Meßwerten auf. Sich entsprechende Bauteile sind hier - wie auch in den folgenden Figuren - mit gleichen Bezugszeichen versehen. Die Anzeigeeinheiten 22, 23 sind in einem Zifferblatt 8 angeordnet, das außerdem mit beleuchtbaren Symbolfeldern 28 versehen ist. Jeweils eine Skalenteilung 3 der Anzeigeeinheiten 22, 23 kann - wie hier gezeigt - auf das Zifferblatt 8 aufgedruckt oder Bestandteil eines zusätzlichen Rahmenelements sein. Die Skalenteilung 3 ist fest und nicht veränderbar. In einer Ausnehmung des Zifferblattes 8 und in einem von der Skalenteilung 3 ringförmig umschlossenen Bereich ist jeweils ein Display 4 angeordnet. Auf dem Display 4 ist u.a. eine Skalenbeschriftung 5 darstellbar. Die jeweilige Skalenbeschriftung läßt erkennen, daß die in Figur 1 linke Anzeigeeinheit 23 eine Drehzahl- und die rechte Anzeigeeinheit 22 eine Geschwindigkeitsanzeige ist. Die Skalenbeschriftung 5 ist veränderbar, so daß z.B. der Anzeigebereich variiert, die angezeigte Einheit umgeschaltet oder zusätzliche Markierungen wie z.B. Geschwindigkeitsgrenzmarkierungen 29 oder Drehzahlwarnmarkierungen 30 zugeschaltet werden können. Damit ist es auch möglich, ohne mechanische Änderungen oder eine andere Bedruckung eines Zifferblattes einer Anzeigevorrichtung diese z.B. zur Anzeige einer Geschwindigkeit in km/h oder in Meilen/h zu verwenden. Darüber hinaus sind auf dem Display 4 in bestimmten Feldern weitere Anzeigen, wie eine Tank-/Restwegstreckenanzeige 21, vorhanden.

Sowohl die Skalenbeschriftung 5 als auch eine Zeigerspitze 6 des Zeigers 2 ist unmittelbar Markierungen der Skalenteilung 3 zugeordnet, so daß eine einfache Ablesbarkeit der analogen Zeigerinstrumente der Anzeigeeinheiten 22, 23 gewährleistet ist.

Bei der Anzeigeeinheit 23 ist das Meßwerk 1 des Zeigerinstruments einer Zeigerwelle 7 unmittelbar gegenüberliegend angeordnet, so daß die Zeigerwelle 7 und eine Meßwerkabtriebswelle 9 ein einziges Bauteil bildend miteinander verbunden sein können. Hierzu ist das Display 4, das in vorliegendem Ausführungsbeispiel ein LC-Dot-Matrix-Display ist, mit einer Ausnehmung, z.B. einer Durchgangsbohrung, versehen, so daß es von der Meßwerkabtriebswelle 9 durchgriffen wird. Es ist auch denkbar, die Meßwerkabtriebswelle 9 und die Zeigerwelle 7 nicht durch Formschluß, sondern magnetisch zu koppeln, so daß eine Ausnehmung in dem Display 4 nicht erforderlich ist. Über eine Zeigernabe 13 ist der Zeiger 2 mit der Zeigerwelle 7 und weiter mit der Meßwerkabtriebswelle 9 verbunden, so daß eine Bewegung der Meßwerkabtriebswelle 9 zu einem Verschwenken des Zeigers 2 um eine Zeigerschwenkachse 12 führt.

Das analoge Zeigerinstrument der Anzeigeeinheit 22 weist ein von der Zeigerschwenkachse 12 beabstandetes Meßwerk 1 auf. Die Meßwerkabtriebswelle 9 treibt über ein Zugmittelgetriebe 10 die Zeigerwelle 7 des Zeigers 2 an. Betrachterseitig ist das Getriebe 10 von einer Blende 11 abgedeckt. Die Blende 11 dient gleichzeitig als Abdeckung bzw. Unterstand für den Zeiger 2, wenn sich dieser in einer Ruheposition befindet. Aus diesem Grund ist die Blende 11 auch in der Anzeigeeinheit 23 vorhanden. Die Meßwerke 1 der Anzeigeeinheiten 22 und 23 sind auf der einem Betrachter abgewandten Seite des Zifferblatts 8 angeordnet und in Figur 1 nur zur Verdeutlichung ihrer Einbauposition dargestellt.

Weiterhin ist in die Anzeigeeinheit 22 eine Begrenzung 16 des Displays 4 gestrichelt eingezeichnet. Es ist zu erkennen, daß das Display 4 rechteckig ist, wobei die unterhalb der Skalenteilung 3 und dem Zifferblatt 8 angeordneten Eckbereiche 32 des Displays 4 für einen Betrachter nicht sichtbar sind. Diese Eckbereiche 32 sind für eine Informationsdarstellung nicht verfügbar und brauchen deshalb keine ansteuerbaren Elemente aufzuweisen.

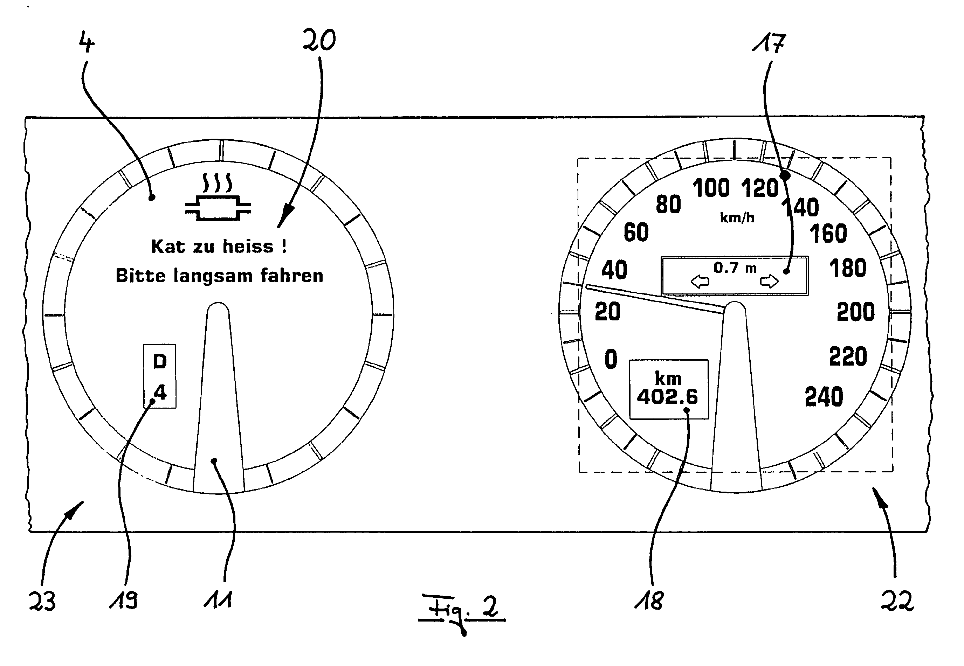

In Figur 2 ist die Anzeigevorrichtung aus Figur 1 in einem anderen Ansteuerungszustand der Anzeigeeinheit 23 gezeigt. Der Zeiger der Anzeigeeinheit 23 befindet sich dabei in einer Ruheposition hinter der Blende 11. Somit steht das gesamte Display 4 zur Darstellung von Betriebsinformationen des Kraftfahrzeugs zur Verfügung. Ein Anzeigefeld 19 zur Darstellung einer Ganganzeige eines Automatikgetriebes ist ständig freigehalten. Der übrige Bereich des Displays 4 wird hingegen nicht mehr - wie in Figur 1 - für einen Drehzahlmesser verwendet, sondern dient der Darstellung einer Warnanzeige 20 für einen überhitzten Katalysator in der Abgasanlage des Kraftfahrzeugs. Um die Aufmerksamkeit des Betrachters zu erhöhen, kann die Warnanzeige 20 z.B. blinkend oder in einer signalkräftigen, von dem Farbton des Drehzahlmessers in Figur 1 abweichenden Farbe dargestellt sein. In der Geschwindigkeitsanzeige der Anzeigeeinheit 22 sind zusätzliche Anzeigefelder 17 für eine Abstandsanzeige und 18 für die Anzeige einer zurückgelegten Wegstrecke vorgesehen.

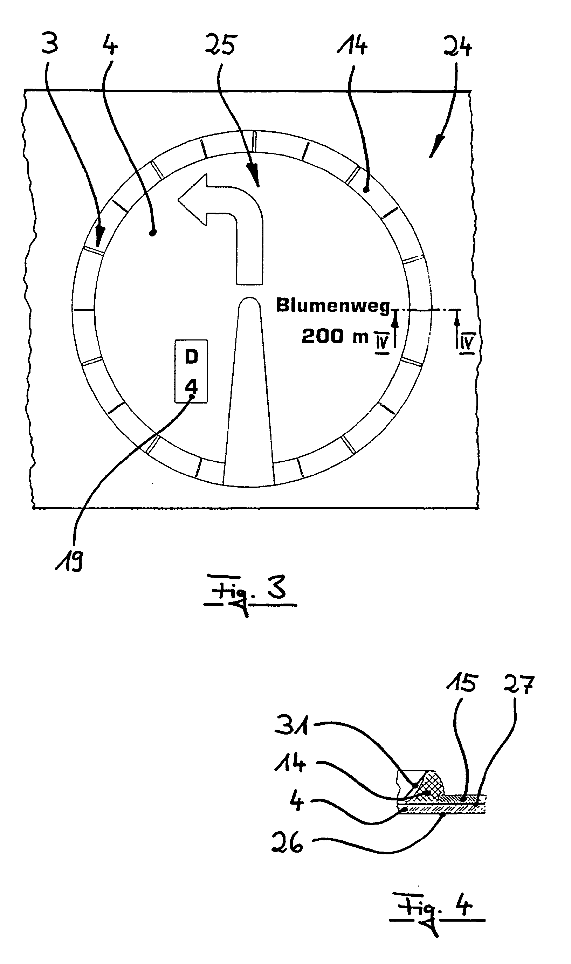

Ein weiteres Ausführungsbeispiel einer Anzeigevorrichtung ist in Figur 3 gezeigt. Hierbei ist ein Display 4 einer Anzeigeeinheit 24 in ein Rahmenelement 14, das eine Skalenteilung 3 aufweist, eingesetzt. Das Display 4 hat ein Anzeigefeld 19 für eine Ganganzeige eines automatischen Getriebes und stellt im übrigen Display-Bereich eine Verkehrsleitanzeige 25 dar. Ein Zeiger eines analogen Anzeigeinstruments ist auch bei der Anzeigeeinheit 24 von einer Blende 11 in einer Parkposition abgedeckt. Es ist jedoch auch denkbar, daß die Anzeigeeinheit 24 kein Zeigerinstrument, sondern lediglich ein Display 4 mit einem Rahmenelement 14 aufweist. Eine derartige Ausführung bietet sich z.B. dann an, wenn in einer Instrumententafel eines Kraftfahrzeugs ein einheitliches Erscheinungsbild von Anzeigeeinheiten mit - wie sie z.B. in Figuren 1 und 2 dargestellt sind - und ohne Zeigerinstrument geschaffen werden soll.

Zur Verdeutlichung des dreidimensionalen Aufbaus der Anzeigeeinheit 24 ist in Figur 4 ein Schnitt entlang der Linie IV-IV aus Figur 3 gezeigt. Das Rahmenelement 14 ist auf das Display 4 aufgesetzt und mit diesem verklipst oder verklebt. Das Display 4, in diesem Fall eine Flüssigkristallzelle, ist an seiner Vorderseite und an seiner Rückseite jeweils mit einer Elektrolumineszenzfolie 27 bzw. 26 zur Beleuchtung des Displays 4 versehen. Das Rahmenelement 14, das den ansteuerbaren Display-Bereich abgrenzt, ist als Lichtleiter ausgebildet und kann durch eine in den Lichtleiter Licht einspeisende (nicht dargestellte) Lichtquelle erleuchtet werden. Skalenstriche 31 der Skalenteilung 3 auf dem Rahmenelement 14 können auf dieses z.B. aufgedruckt oder darin eingraviert sein. Eine Blende 15 deckt den außerhalb des Rahmenelements 14 angeordneten Display-Bereich für einen Betrachter ab und kann z.B. ein einziges Bauteil bildend mit einem Zifferblatt oder einer Symbolfeldfolie eines Kombinationsinstruments des Kraftfahrzeugs verbunden sein.

## Patentansprüche

1. Anzeigevorrichtung, insbesondere für ein Fahrzeug, mit einem von einem Meßwerk über eine Messwerkabtriebswelle (9) und eine Zeigerwelle (7) angetriebenen Zeiger zur analogen Darstellung von Meßwerten, einer dem Zeiger zugeordneten festen Skalenteilung und einem in einem von dem Zeiger zumindest teilweise überstrichenen Bereich angeordneten Display zur Darstellung veränderbarer Informationen, wobei auf dem Display eine Skalenbeschriftung darstellbar ist, wobei die Skalenteilung (3) außerhalb eines ansteuerbaren Display-Bereichs angeordnet ist und daß sich zumindest ein Teilbereich des Displays (4) entlang der Skalenteilung (3) erstreckt und in diesem Bereich die Skalenbeschriftung (5) darstellbar ist, und wobei
der Zeiger (2) um eine zu der Anzeigeebene des Displays (4) in etwa senkrechte Achse (12) schwenkbar ist, **dadurch gekennzeichnet, daß** zwischen einer Meßwerkabtriebswelle (9) und Zeigerwelle (7) ein eine Drehbewegung der Meßwerkabtriebswelle (9) auf die Zeigerwelle (7) übertragendes Getriebe (10) angeordnet ist.

2. Anzeigevorrichtung nach Anspruch 1, **dadurch gekennzeichnet, daß** die Skalenbeschriftung (5) veränderbar ist.

3. Anzeigevorrichtung nach Anspruch 1 oder 2, **dadurch gekennzeichnet, daß** das Display (4) ein Dot-Matrix-Display ist.

4. Anzeigevorrichtung nach einem der vorhergehenden Ansprüche, **dadurch gekennzeichnet, daß** das Display (4) eine Flüssigkristallzelle aufweist.

5. Anzeigevorrichtung nach Anspruch 1, **dadurch gekennzeichnet, daß** der Zeiger (2) in einem einer Zeigerspitze (6) abgewandten Bereich eine mit einer Zeigerwelle (7) verbundene Zeigernabe (13) aufweist und daß die Drehachsen der Zeigerwelle (7) und einer Abtriebswelle (9) des Meßwerks (1) deckungsgleich oder in etwa parallel zueinander angeordnet sind.

6. Anzeigevorrichtung nach einem der vorhergehenden Ansprüche, **dadurch gekennzeichnet, daß** das Getriebe (10) ein Zugmittel-, Reibrad- oder Zahnradgetriebe ist.

7. Anzeigevorrichtung nach einem der vorhergehenden Ansprüche, **dadurch gekennzeichnet, daß** zumindest ein Teil des Getriebes (10) vor der einem Betrachter zugewandten Seite der Anzeigeebene des Displays (4) angeordnet ist.

8. Anzeigevorrichtung nach Anspruch 7, **dadurch gekennzeichnet, daß** die vor der Anzeigeebene angeordneten Teile des Getriebes (10) betrachterseitig mit einer Blende (11) abgedeckt sind.

9. Anzeigevorrichtung nach einem der vorhergehenden Ansprüche, **dadurch gekennzeichnet, daß** der Zeiger (2) betrachterseitig mit einer Blende (11) abdeckbar ist.

10. Anzeigevorrichtung nach einem der vorhergehenden Ansprüche, **dadurch gekennzeichnet, daß** die Skalenteilung (3) in unmittelbarer Nähe oder innerhalb eines von der Zeigerspitze (6) überstrichenen Bereichs der Anzeigevorrichtung angeordnet ist.

11. Anzeigevorrichtung nach einem der vorhergehenden Ansprüche, **dadurch gekennzeichnet, daß** die Skalenteilung (3) auf dem Display (4) angebracht ist.

12. Anzeigevorrichtung nach einem der Ansprüche 1 bis 10, **dadurch gekennzeichnet, daß** die Skalenteilung (3) auf einem Rahmenelement (14) angebracht ist, wobei das Rahmenelement das Display (4) zumindest teilweise umgreift.

13. Anzeigevorrichtung nach Anspruch 12, **dadurch gekennzeichnet, daß** das Display (4) in eine Ausnehmung des Rahmenelements (14) eingesetzt ist.

14. Anzeigevorrichtung nach Anspruch 12, **dadurch gekennzeichnet, daß** das Rahmenelement (14) auf das Display (4) aufgesetzt ist.

15. Anzeigevorrichtung nach einem der Ansprüche 12 bis 14, **dadurch gekennzeichnet, daß** das Rahmenelement (14) ein Lichtleiter ist.

16. Anzeigevorrichtung nach einem der vorhergehenden Ansprüche, **dadurch gekennzeichnet, daß** die Skalenteilung (3) gegenüber der Anzeigeebene des Displays (4) erhöht oder vertieft ist.

17. Anzeigevorrichtung nach einem der vorhergehenden Ansprüche, **dadurch gekennzeichnet, daß** die Skalenteilung (3) erleuchtbar ist.

18. Anzeigevorrichtung nach einem der vorhergehenden Ansprüche, **dadurch gekennzeichnet, daß** ein Teilbereich des Displays (4) von einer Blende (15) abgedeckt ist.

19. Anzeigevorrichtung nach einem der vorhergehenden Ansprüche, **dadurch gekennzeichnet, daß** das Display (4) in zumindest einem Teilbereich frei ansteuerbar ist.

20. Anzeigevorrichtung nach einem der vorhergehenden Ansprüche, **dadurch gekennzeichnet, daß** das Display (4) einen nicht ansteuerbaren Bereich aufweist.

21. Anzeigevorrichtung nach einem der vorhergehenden Ansprüche, **dadurch gekennzeichnet, daß** das Display (4) beleuchtbar ist.

22. Anzeigevorrichtung nach einem der vorhergehenden Ansprüche, **dadurch gekennzeichnet, daß** die Anzeigevorrichtung ein Zifferblatt aufweist, wobei die Skalenteilung (3) auf dem Zifferblatt dargestellt ist und zumindest ein ansteuerbarer Bereich des Displays (4) in einer Ausnehmung des Zifferblattes angeordnet ist.

## Claims

1. Display device, in particular for a vehicle, having a pointer, which can be actuated by a measuring mechanism via a measuring mechanism output shaft (9) and a pointer shaft (7), for the analog representation of measured values, fixed scale marks which are assigned to the pointer, and a display, arranged in a region over at least part of which the pointer travels, for representing variable information, it being possible to represent scale labeling on the display, **characterized in that** the scale marks (3) are arranged outside a display region which can be actuated, and in which at least part of the display (4) extends along the scale marks (3) and the scale labeling (5) can be represented in this region, and in which pointer (2) can be pivoted about an axis (12) which is approximately perpendicular to the representational plane of the display (4), **characterized in that** a gear mechanism (10) which transmits a rotary movement of a measuring mechanism output shaft (9) to the pointer shaft (7) is arranged between a measuring mechanism output shaft (9) and a pointer shaft (7).

2. Display device according to Claim 1, **characterized in that** the scale labeling (5) can be varied.

3. Display device according to Claim 1 or 2, **characterized in that** the display (4) is a dot matrix display.

4. Display device according to one of the preceding claims, **characterized in that** the display (4) has a liquid crystal cell.

5. Display device according to Claim 1, **characterized in that** the pointer (2) has, in a region turned away from a pointer tip (6), a pointer hub (13) which is connected to a pointer shaft (7), and **characterized in that** the axes of rotation of the pointer shaft (7) and of an output shaft (9) of the measuring mechanism (1) are arranged so as to be congruent or approximately parallel to one another.

6. Display device according to one of the preceding claims, **characterized in that** the gear mechanism (10) is a flexible drive mechanism, friction wheel mechanism or gearwheel mechanism.

7. Display device according to one of the preceding claims, **characterized in that** at least part of the gear mechanism (10) is arranged in front of the side of the representational plane of the display (4) which faces a viewer.

8. Display device according to Claim 7, **characterized in that** the parts of the gear mechanism (10) which are arranged in front of the representational plane of the display are covered on the viewer side with a panel (11).

9. Display device according to one of the preceding claims, **characterized in that** the pointer (2) can be covered on the viewer side with a panel (11).

10. Display device according to one of the preceding claims, **characterized in that** the scale marks (3) are arranged in the direct vicinity of, or within, a region of the display device over which the pointer tip (6) travels.

11. Display device according to one of the preceding claims, **characterized in that** the scale marks (3) are located on the display (4).

12. Display device according to one of Claims 1 to 10, **characterized in that** the scale marks (3) are located on a frame element (14), the frame element engaging at least partially around the display (4).

13. Display device according to Claim 12, **characterized in that** the display (4) is inserted into a recess in the frame element (14).

14. Display device according to Claim 12, **characterized in that** the frame element (14) is fitted onto the display (4).

15. Display device according to one of Claims 12 to 14, **characterized in that** the frame element (14) is a light guide.

16. Display device according to one of the preceding claims, **characterized in that** the scale marks (3) are elevated or countersunk with respect to the representational plane of the display (4).

17. Display device according to one of the preceding claims, **characterized in that** the scale marks (3) can be illuminated.

18. Display device according to one of the preceding claims, **characterized in that** part of the display (4) is covered by a panel (15).

19. Display device according to one of the preceding claims, **characterized in that** the display (4) can be actuated freely in at least one part.

20. Display device according to one of the preceding claims, **characterized in that** the display (4) has a region which cannot be actuated.

21. Display device according to one of the preceding claims, **characterized in that** the display (4) can be illuminated.

22. Display device according to one of the preceding claims, **characterized in that** the display device has a dial, the scale marks (3) being represented on the dial, and at least one region of the display (4) which can be actuated being arranged in a recess of the dial.

## Revendications

1. Dispositif d'affichage, destiné notamment à un véhicule automobile et comportant une aiguille entraînée, par l'intermédiaire d'un arbre d'entraînement (9) du système de mesure et d'un arbre (7) de l'aiguille, par un système de mesure, où ladite aiguille permet une représentation analogique de valeurs de mesure, une échelle de mesure fixe correspondant à l'aiguille et un écran disposé dans une partie au moins partiellement balayée par l'aiguille et permettant de représenter des informations modifiables, où une inscription de l'échelle de mesure peut être représentée sur l'écran, où l'échelle de mesure (3) est placée hors de la partie de l'écran pouvant être excitée et où au moins une partie de l'écran (4) s'étend le long de l'échelle de mesure (3) et où l'inscription (5) de l'échelle de mesure peut être représentée dans cette partie, et où l'aiguille (2) peut pivoter autour d'un axe (12) approximativement perpendiculaire au plan d'affichage de l'écran (4), **caractérisé par le fait qu'**un mécanisme de transmission (10) est placé entre l'arbre d'entraînement (9) du système de mesure et l'arbre (7) de l'aiguille et transmet un mouvement de rotation de l'arbre d'entraînement (9) du système de mesure à l'arbre (7) de l'aiguille.

2. Dispositif d'affichage selon la revendication 1, **caractérisé par le fait que** l'inscription (5) de l'échelle de mesure est modifiable.

3. Dispositif d'affichage selon la revendication 1 ou 2, **caractérisé par le fait que** l'écran (4) est un écran à matrice DOT.

4. Dispositif d'affichage selon l'une des revendications précédentes, **caractérisé par le fait que** l'écran (4) comporte une cellule à cristaux liquides.

5. Dispositif d'affichage selon la revendication 1, **caractérisé par le fait que** l'aiguille (2) comporte, dans une partie opposée à la pointe (6) de l'aiguille, un moyeu (13) lié à un arbre d'aiguille (7) et que les axes de rotation de l'arbre d'aiguille (7) et d'un arbre d'entraînement (9) du système de mesure (1) coïncident ou sont approximativement parallèles l'un à l'autre.

6. Dispositif d'affichage selon l'une des revendications précédentes, **caractérisé par le fait que** le mécanisme de transmission (10) est une transmission à système de traction, à roue à friction ou à roue dentée.

7. Dispositif d'affichage selon l'une des revendications précédentes, **caractérisé par le fait que** au moins une partie du mécanisme de transmission (10) est placée devant le côté du plan d'affichage de l'écran (4) tourné vers un observateur.

8. Dispositif d'affichage selon la revendication 7, **caractérisé par le fait que** les parties du mécanisme de transmission (10) placées devant le plan d'affichage sont dissimulées, du côté de l'observateur, par un cache (11).

9. Dispositif d'affichage selon l'une des revendications précédentes, **caractérisé par le fait que** l'aiguille (2) peut être recouverte, du côté de l'observateur, par un cache (11).

10. Dispositif d'affichage selon l'une des revendications précédentes, **caractérisé par le fait que** l'échelle de mesure (3) est placée à proximité immédiate ou dans une partie du dispositif d'affichage balayée par la pointe (6) de l'aiguille.

11. Dispositif d'affichage selon l'une des revendications précédentes, **caractérisé par le fait que** l'échelle de mesure (3) est placée sur l'écran (4).

12. Dispositif d'affichage selon l'une des revendications 1 à 10, **caractérisé par le fait que** l'échelle de mesure (3) est placée sur un élément d'encadrement (14), l'élément d'encadrement enserrant au moins partiellement l'écran (4).

13. Dispositif d'affichage selon la revendication 12, **caractérisé par le fait que** l'écran (4) est inséré dans un évidement de l'élément d'encadrement (14).

14. Dispositif d'affichage selon la revendication 12, **caractérisé par le fait que** l'élément d'encadrement (14) est enfiché sur l'écran (4).

15. Dispositif d'affichage selon l'une des revendications 12 à 14, **caractérisé par le fait que** l'élément d'encadrement (14) est un guide d'ondes optiques.

16. Dispositif d'affichage selon l'une des revendications précédentes, **caractérisé par le fait que** l'échelle de mesure (3) est surélevée ou en creux par rapport au plan d'affichage de l'écran (4).

17. Dispositif d'affichage selon l'une des revendications précédentes, **caractérisé par le fait que** l'échelle de mesure (3) peut être éclairée.

18. Dispositif d'affichage selon l'une des revendications précédentes, **caractérisé par le fait qu'**une partie de l'écran (4) est recouverte par un cache (15).

19. Dispositif d'affichage selon l'une des revendications précédentes, **caractérisé par le fait que** l'écran (4) peut être, au moins dans une partie, librement excité.

20. Dispositif d'affichage selon l'une des revendications précédentes, **caractérisé par le fait que** l'écran (4) comporte une partie ne pouvant pas être excitée.

21. Dispositif d'affichage selon l'une des revendications précédentes, **caractérisé par le fait que** l'écran (4) peut être éclairé.

22. Dispositif d'affichage selon l'une des revendications précédentes, **caractérisé par le fait que** le dispositif d'affichage comporte un cadran, l'échelle de mesure (3) étant représentée sur le cadran et au moins un partie de l'écran (4), qui peut être excitée, étant placée dans un évidement du cadran.
